# EUROPÄISCHE PATENTSCHRIFT

(11) **EP 4 082 925 B1**
(45) Veröffentlichungstag und Bekanntmachung des Hinweises auf die Patenterteilung: **13.08.2025**
(21) Anmeldenummer: 21171017.3
(22) Anmeldetag: 28.04.2021
(51) Int. Cl.: B65B 57/10, G01N 21/90, B65B 3/00, B65B 5/10

(54) **PRÜFVORRICHTUNG UND VERFAHREN ZUM PRÜFEN VON BEHÄLTERN**
TESTING DEVICE AND METHOD FOR TESTING CONTAINERS
DISPOSITIF DE VÉRIFICATION ET PROCÉDÉ DE VÉRIFICATION DE RÉCIPIENTS

(43) Veröffentlichungstag der Anmeldung: 02.11.2022
(73) Patentinhaber: Uhlmann Pac-Systeme GmbH & Co. KG, 88471 Laupheim (DE)
(72) Erfinder: Kronawitter, Michael, 89179 Beimerstetten (DE)
(74) Vertreter: Wächter, Jochen

(56) Entgegenhaltungen:
- JP-A- 2008 213 893
- JP-B2- 3 391 502
- US-B2- 7 343 943

## Beschreibung

Die vorliegende Erfindung betrifft eine Prüfvorrichtung, eine Verpackungsmaschine mit einer solchen Prüfvorrichtung sowie ein Verfahren zum Prüfen von Behältern für einnehmbare Produkte, insbesondere medizinische oder pharmazeutische Produkte oder Nahrungs- oder Nahrungsergänzungsmitteln, auf Fremdkörper, insbesondere auf metallische Fremdkörper.

Verpackungsmaschinen zum Befüllen von Flaschen und flaschenähnlichen Behältern, die hierin allgemein als Behälter bezeichnet werden, mit einnehmbaren Produkten, wie z.B. medizinischen oder pharmazeutischen Produkten oder von Nahrungs- oder Nahrungsergänzungsmitteln, und zum Verschließen der befüllten Behälter werden auch als Flaschenlinien bezeichnet. Neben einer Fülleinheit zum Befüllen der Behälter und einer Verschließeinheit zum Verschließen der befüllten Behälter kann eine solche Flaschenlinie weiterhin Zuführeinheiten für Trockenmittel und/oder Wattebauschen umfassen. Es sind kontinuierlich und getaktet betriebene Flaschenlinien bekannt, bei denen die Behälter die Flaschenlinie entsprechend kontinuierlich bzw. getaktet durchlaufen.

In der Verpackungsmaschine besteht die Gefahr, dass Fremdkörper, wie zum Beispiel metallische Fremdkörper, in die noch unverschlossenen Behälter geraten. Behälter, die solche Fremdkörper enthalten, müssen zuverlässig erkannt werden können und dürfen nicht in den Vertrieb gelangen.

Aus der WO 2013/119741 A1 und der WO 2015/092010 A1 sind beispielsweise Metalldetektoren bekannt, die tunnelförmig ausgebildet sind und eine Durchgangsöffnung aufweisen, durch die ein Förderband zum Fördern von zu prüfenden Produkten geführt ist. Weiter offenbart JP 2008 213893 A eine Prüfvorrichtung mit Förderband, bei der mehrere Trägerelemente und eine Sensor-Einrichtung beweglich zueinander angeordnet sind, wobei der Sensor oberhalb der Förderebene angeordnet ist.

Derartige Metalldetektoren eignen sich häufig nicht zum Einsatz in getaktet betriebenen Flaschenlinien, zum Beispiel wenn die Behälter nicht auf einem Förderband gefördert werden, und können sehr teuer sein, was zu hohen Kosten der gesamten Flaschenlinie beiträgt. Enthalten die Kappen oder Deckel der Behälter zudem (metallische) Siegel, kann der Einsatz von Röntgengeräten zur Prüfung des Behälterinhalts auf metallische Fremdkörper erforderlich sein, was ebenfalls sehr kostspielig ist.

Es ist daher eine Aufgabe der vorliegenden Erfindung, eine Prüfvorrichtung, eine Verpackungsmaschine und ein Verfahren bereitzustellen, die eine einfache und kostengünstige Prüfung des Behälterinhalts auf Fremdkörper, insbesondere auf metallische Fremdkörper, bei getaktet betriebenen Verpackungsmaschinen ermöglichen.

Diese Aufgabe wird durch den Gegenstand der Ansprüche 1,5 und 10 gelöst. Bevorzugte Ausführungsformen sind Gegenstand der abhängigen Ansprüche.

Eine erfindungsgemäße Prüfvorrichtung für eine Verpackungsmaschine zum Verpacken von einnehmbaren Produkten, insbesondere von medizinischen oder pharmazeutischen Produkten oder von Nahrungs- oder Nahrungsergänzungsmitteln, in Behälter ist in Anspruch 1 definiert.

Auf diese Art und Weise wird eine Prüfvorrichtung bereitgestellt, mittels derer getaktet geförderte Behälter in einer Verpackungsmaschine, wie zum Beispiel einer Flaschenlinie, einfach auf Fremdkörper und vor allem auf metallische Fremdkörper geprüft werden können.

Dass eine Relativbewegung zwischen dem Sensor und dem zu prüfenden Behälter in der Bewegungsrichtung erzeugbar ist, wird dadurch erreicht, dass entweder der Sensor stationär angeordnet ist und nur das Trägerelement mit dem zu prüfenden Behälter bewegbar ist, oder sowohl der Sensor als auch das Trägerelement mit dem zu prüfenden Behälter bewegbar ist. Um einen einfachen und kostengünstigen Aufbau zu ermöglichen, ist bevorzugt nur das Trägerelement beweglich ausgebildet.

Vorzugsweise ist jeder zu prüfende Behälter der Mehrzahl von Behältern im Prüfbereich bereits mit einnehmbaren Produkten befüllt und verschlossen. Insbesondere ist jeder Behälter mit einer Vielzahl von einnehmbaren Produkten befüllt, die vorzugsweise zwischen 10 und 200, mehr bevorzugt zwischen 10 und 150, noch mehr bevorzugt zwischen 10 und 120 Produkte umfasst. So kann verhindert werden, dass nach der Prüfung der Mehrzahl von Behältern durch die Prüfvorrichtung Fremdkörper in die Behälter gelangen.

Im Allgemeinen sind die einnehmbaren Produkte bevorzugt medizinische Produkte, pharmazeutische Produkte, Nahrungsmittel oder Nahrungsergänzungsmittel.

Bei den einnehmbaren handelt es sich bevorzugt um Solida, wie zum Beispiel Tabletten, Dragées oder Kapseln. Die einnehmbaren Produkte liegen vorzugsweise lose bzw. als Schüttgut vor. Dies trifft sowohl auf medizinische oder pharmazeutische Produkte, wie Arzneimittel, als auch auf Nahrungs- und Nahrungsergänzungsmittel zu. Bei den Lebensmitteln kann es sich beispielsweise um Kaugummis, Pastillen, Bonbons oder dergleichen handeln. Bei den Nahrungsergänzungsmitteln handelt es sich z.B. um Mineralien, Vitamine, Fettsäuren oder dergleichen in Pulver-, Tabletten- oder Kapselform.

Die Behälter der Mehrzahl von Behältern sind dazu eingerichtet, die einnehmbaren Produkte lose aufzunehmen. Mit anderen Worten sind die Behälter dazu eingerichtet, unverpackte, einzeln handhabbare bzw. als Schüttgut vorliegende einnehmbare Produkte aufzunehmen. Bei den einnehmbaren Produkten kann es sich aber auch um Liquidaprodukte handeln. Die Behälter der Mehrzahl von Behältern sind dann dazu eingerichtet, die Liquidaprodukte unmittelbar aufzunehmen, also mit den Liquidaprodukten befüllt zu werden.

Folglich ist die Verpackungsmaschine dazu eingerichtet, entsprechende einnehmbare Produkte in den Behälter zu verpacken, insbesondere die einnehmbaren Produkte direkt in die Behälter zu füllen und die Behälter zu verschließen.

Der Sensor kann ein induktiver Sensor zum Erkennen metallischer Fremdkörper sein und beispielsweise als Ringsensor ausgebildet sein. Solche Sensoren sind kostengünstig. Dies wirkt sich entsprechend positiv auf die Kosten der Prüfvorrichtung bzw. der Verpackungsmaschine aus. Außerdem lassen sich diese Sensoren einfach in die Prüfvorrichtung bzw. die Verpackungsmaschine integrieren und weisen eine ausreichend hohe Sensibilität und Auflösung auf, um auch kleine metallische Fremdkörper zuverlässig zu erkennen.

Vorzugsweise ist der Sensor dazu eingerichtet, metallische Fremdkörper zu erkennen, die eine Größe zwischen 0,5 und 25 mm, mehr bevorzugt zwischen 1,0 und 2,0 mm aufweisen. Die Größe kann dabei einem Durchmesser im Wesentlichen kugelförmiger Fremdkörper oder einer Kantenlänge im Wesentlichen quaderförmiger Fremdkörper entsprechen.

Der Sensor ist besonders bevorzugt dazu eingerichtet, Fremdkörper zu erkennen, die aus einem der folgenden Materialien oder einer Kombination daraus gebildet sind: Eisen, Edelstahl, Aluminium, Messing, Buntmetalle.

Ein weiterer Vorteil des Sensors ist, dass er nur einen geringen metallfreien Bereich um den Sensor herum erfordert, der zur Vermeidung von Störungen des Sensors keine metallischen Gegenstände aufweisen sollte. Vorzugsweise ist der metallfreie Bereich definiert durch einen ersten Abstand zum Sensor parallel zur Förderebene und einen zweiten Abstand zum Sensor senkrecht zur Förderebene. Der erste Abstand beträgt vorzugsweise zwischen 0 mm und 100 mm, mehr bevorzugt zwischen 0 mm und 75 mm und noch mehr bevorzugt zwischen 0 mm und 50 mm. Der zweite Abstand beträgt vorzugsweise zwischen 0 mm und 200 mm, mehr bevorzugt zwischen 0 mm und 150 mm und noch mehr bevorzugt zwischen 0 mm und 110 mm. Als Extremwerte des ersten und des zweiten Abstands sind die angegebenen Grenzwerte der Bereiche auch separat von dieser Offenbarung umfasst. Ebenso sollen alle Zwischenwerte der angegebenen Bereiche, insbesondere in ganzen Millimetern, vom Offenbarungsgehalt umfasst sein.

Die Förderrichtung ist parallel zur Förderebene ausgerichtet. Unabhängig davon und unabhängig voneinander verlaufen die Förderrichtung und die Förderebene vorzugsweise jeweils im Wesentlichen horizontal. Die Bewegungsrichtung ist dann im Wesentlichen vertikal ausgerichtet.

Die Förderebene kann durch eine Fläche definiert sein, auf der die Mehrzahl von Behältern in Förderrichtung gefördert wird. Zum Beispiel ist die Fläche eine Oberfläche eines Fördertischs oder eines Förderbands. Die Fördereinrichtung kann die Mehrzahl von Behältern zum Beispiel auf dem Fördertisch durch die Prüfvorrichtung bewegen.

Um eine möglichst einfache Konstruktion der Prüfvorrichtung zu ermöglichen, ist die Relativbewegung zwischen dem Sensor und dem Trägerelement bzw. dem zu prüfenden Behälter zwischen der ersten Anordnung und der zweiten Anordnung ausschließlich in Bewegungsrichtung gerichtet. Die Relativbewegung zwischen der ersten und der zweiten Anordnung ist nicht in eine von der Bewegungsrichtung abweichende Richtung gerichtet. Insbesondere erfolgt zwischen der ersten und der zweiten Anordnung keine Relativbewegung zwischen Sensor und Trägerelement bzw. zu prüfendem Behälter in Förderrichtung.

Bei den Behältern der Mehrzahl von Behältern handelt es sich um Behälter, die mittels eines Deckels verschließbar sind, wie sie zur Aufnahme von einnehmbaren der hierin beschriebenen Art bekannt sind. Jeder Behälter weist einen Boden, eine umlaufende Wand und einen Hals auf. Der Hals bildet eine Öffnung des Behälters, durch die die Produkte in den Behälter gefüllt und aus dem Behälter entnommen werden können. Der Deckel ist vorzugsweise auf den Behälter gepresst oder geschraubt, wobei der Hals dann ein Gewinde aufweist, das mit einem Gewinde des Deckels eingreift. Der Deckel kann aber eine beliebige kraftschlüssige oder formschlüssige Verbindung zum Behälter, insbesondere zu dessen Hals aufweisen. Die Mehrzahl von Behältern kann aus Kunststoff oder Glas gebildet sein.

In allen hierin beschriebenen Ausführungsformen sind die Behälter der Mehrzahl von Behältern bevorzugt als Flaschen ausgebildet. Alle hierin beschriebenen Merkmale der Behälter treffen auch auf Flaschen zu. Der Begriff "Flasche" kann daher für diese bevorzugte Ausführungsform durchwegs synonym zu dem Begriff "Behälter" verwendet werden. Auch flaschenähnliche Behälter, wie Ampullen, Karpullen oder Vials sollen hierin unter den Oberbegriff Flaschen fallen. Dies gilt ebenso für verschließbare (Kunststoff-) Behälter bzw. Flaschen, wie sie z.B. aus dem Bereich von Lebensmitteln und Nahrungsergänzungsmitteln bekannt sind.

Jeder Behälter der Mehrzahl von Behältern ist vorzugsweise rotationssymmetrisch um eine Mittelachse ausgebildet. Die Mittelachse ist vorzugsweise zumindest im Prüfbereich senkrecht zur Förderebene und parallel zur Bewegungsrichtung ausgerichtet. Der zu prüfende Behälter kann im Prüfbereich mit dem Boden auf dem Trägerelement stehen.

Die Behälter der Mehrzahl von Behältern weisen vorzugsweise jeweils einen Durchmesser auf, der zwischen 20 mm und 1000 mm, mehr bevorzugt zwischen 25 mm und 77 mm beträgt.

Eine Höhe der Behälter der Mehrzahl von Behältern beträgt vorzugsweise zwischen 40 mm und 200 mm.

In einer bevorzugten Ausführungsform ist der Sensor ringförmig ausgebildet, zum Beispiel als (induktiver) Ringsensor bzw. Ringdetektor, wie bereits beschrieben. Der ringförmige Sensor weist eine Öffnung auf, in die der zu prüfende Behälter einführbar ist und die vorzugsweise eine Durchgangsöffnung bildet. Ein Innenumfang des Sensors entspricht einem Innenumfang der Öffnung und kann an die Form der zu prüfenden Behälter angepasst sein. Bevorzugt sind der Innenumfang des Sensors, der Innenumfang der Öffnung sowie die zu prüfenden Behälter im Wesentlichen zylindrisch ausgebildet. Der ringförmige Sensor weist dann die Form eines Kreisrings auf. Es sind jedoch auch andere Geometrien möglich.

Ein Innendurchmesser des ringförmigen Sensors entspricht dem Durchmesser der Öffnung und ist größer als der Durchmesser der Mehrzahl von Behältern. Vorzugsweise beträgt der Innendurchmesser des Sensors bzw. der Durchmesser der Öffnung zwischen 20 mm und 100 mm.

Eine Höhe des Sensors entspricht bei einer Durchgangsöffnung im Wesentlichen einer Tiefe der Öffnung in axialer Richtung der Öffnung. Die Höhe des Sensors bzw. die Tiefe der Öffnung kann kleiner als die Höhe der Mehrzahl von Behältern sein. Der Sensor erkennt einen Fremdkörper dann während der Relativbewegung zwischen dem Sensor und dem zu prüfenden Behälter.

Eine besonders zuverlässige Erkennung von Fremdkörpern kann ermöglicht werden, wenn der Sensor den zu prüfenden Behälter in der zweiten Anordnung in Umfangsrichtung des zu prüfenden Behälters vollständig umgibt. Dies ist besonders einfach mit dem bereits beschriebenen ringförmigen Sensor möglich, kann aber auch mit anderen Sensoren verwirklicht werden.

Es ist weiterhin bevorzugt, dass die Prüfvorrichtung einen Aktor umfasst, der dazu ausgebildet ist, die Relativbewegung zwischen dem Sensor und dem Trägerelement zu erzeugen. Besonders bevorzugt ist der Aktor mit dem Trägerelement verbunden und dazu ausgebildet, das Trägerelement parallel zur Bewegungsrichtung zu bewegen. Der Aktor kann als elektrischer, elektro-magnetischer, hydraulischer, pneumatischer oder mechanischer Aktor ausgebildet sein.

Das Trägerelement kann in einer Ausführungsform einen Greifer aufweisen, der dazu eingerichtet ist, den zu prüfenden Behälter zu erfassen und relativ zum Sensor zu bewegen. Der Greifer kann den zu prüfenden Behälter von oben, von unten oder von der Seite an der umlaufenden Wand erfassen. Alternativ kann der Greifer den zu prüfenden Behälter von oben oder von der Seite am Hals oder am Deckel erfassen, sofern dieser bereits aufgebrachten ist.

In einer besonders bevorzugten Ausführungsform ist der zu prüfende Behälter im Prüfbereich auf dem Trägerelement angeordnet. Das Trägerelement ist dann derart ausgebildet, dass es den zu prüfenden Behälter im Prüfbereich von unten stützt und dass es in Bewegungsrichtung bewegbar ist. Das Trägerelement kann in diesem Fall besonders einfach ausgebildet und gelagert sein. Der Sensor ist dann vorzugsweise stationär angeordnet, um einen einfachen und kostengünstigen Aufbau der Prüfvorrichtung zu ermöglichen. Der Sensor kann aber auch bewegbar sein.

Vorzugsweise liegt eine Kontaktfläche des Trägerelements, auf der der zu prüfende Behälter angeordnet ist, in der ersten Anordnung in der Förderebene und in der zweiten Anordnung nicht in der Förderebene. Der Behälter kann z.B. mittels seines Bodens auf der Kontaktfläche stehen. Auf diese Weise kann der zu prüfende Behälter möglichst einfach mittels der Fördereinrichtung auf dem Trägerelement platziert werden, um dann mittels des Trägerelements dem Sensor zugeführt zu werden. Die Kontaktfläche ist bevorzugt parallel zur Förderebene ausgerichtet, insbesondere sowohl in der ersten als auch in der zweiten Anordnung sowie vorzugsweise in allen Positionen zwischen der ersten und der zweiten Anordnung.

Zum Beispiel weist der Fördertisch eine Öffnung auf, in der das Trägerelement in der ersten Anordnung angeordnet ist. Eine innere Umfangsform der Öffnung korrespondiert dann mit einem Außenumfang des Trägerelements. So kann der Behälter einfach auf dem Trägerelement angeordnet und aus der ersten in die zweite Anordnung bewegt werden.

Das erste und zweite Trägerelement sind in Bewegungsrichtung beweglich ausgebildet, wobei der erste und zweite Sensor unterhalb der Förderebene angeordnet sind und das erste und zweite Trägerelement bezüglich der Förderebene absenkbar sind.

In einer Ausführungsform kann das Trägerelement zum Beispiel mittels eines Vorspannelements, wie einer Feder, gelagert und vorzugsweise in eine Position vorgespannt sein, in der die Kontaktfläche in der Förderebene liegt. Der Aktor ist dann bevorzugt derart angeordnet und ausgebildet, dass er zum Beispiel mittels eines Stempels entgegen einer Vorspannkraft des Vorspannelements auf das Trägerelement oder auf den zu prüfenden Behälter einwirkt. Hierzu kann das Vorspannelement unterhalb des Trägerelements angeordnet und mit diesem verbunden sein und der Aktor mit dem Stempel ist oberhalb des Trägerelements und dem zu prüfenden Behälter angeordnet. Der Aktor kann den Behälter und das Trägerelement mittels des Stempels in Bewegungsrichtung in die zweite Anordnung bewegen, insbesondere nach unten drücken.

Alternativ kann der Aktor fest mit dem Trägerelement verbunden sein, sodass eine Stellbewegung des Aktor direkt auf das Trägerelement übertragen wird. Zum Beispiel ist der Aktor unterhalb des Trägerelements angeordnet und dazu eingerichtet, das Trägerelement parallel zur Bewegungsrichtung nach oben und nach unten zu bewegen.

In dieser Ausführungsform ist der Sensor bevorzugt ortsfest angebracht, zum Beispiel an einem Gestell oder Gehäuse der Prüfvorrichtung oder der Verpackungsmaschine.

Alternativ kann der Sensor bewegbar sein.

Um die Effizienz der Prüfvorrichtung zu erhöhen, umfasst die Prüfvorrichtung erfindungsgemäß zumindest einen weiteren Sensor, der in einem weiteren Prüfbereich der Prüfvorrichtung angeordnet und zum Detektieren von Fremdkörpern, insbesondere von metallischen Fremdkörpern, in einem weiteren zu prüfenden Behälter der Mehrzahl von Behältern eingerichtet ist. Der zumindest eine weitere Sensor und zumindest ein weiteres Trägerelement der Prüfvorrichtung, von dem der weitere zu prüfende Behälter im weiteren Prüfbereich aufgenommen ist, sind derart beweglich ausgebildet, dass eine Relativbewegung zwischen dem zumindest einen weiteren Sensor und dem weiteren zu prüfenden Behälter in der Bewegungsrichtung zwischen einer ersten Anordnung und einer zweiten Anordnung erzeugbar ist. In der ersten Anordnung ist der zumindest eine weitere Sensor in der Bewegungsrichtung beabstandet zum weiteren zu prüfenden Behälter angeordnet und in der zweiten Anordnung umgibt der zumindest eine weitere Sensor den weiteren zu prüfenden Behälter zumindest teilweise.

Folglich umfasst die Prüfvorrichtung eine Mehrzahl von Sensoren, die den Sensor und den zumindest einen weiteren Sensor umfasst, zum Prüfen einer Mehrzahl von zu prüfenden Behältern, die den zu prüfenden Behälter und zumindest einen weiteren zu prüfenden Behälter umfasst. Erfindungsgemäß ist die Mehrzahl von Sensoren in Förderrichtung hintereinander angeordnet. Die Mehrzahl von Sensoren kann dann dazu eingerichtet sein, die Mehrzahl von zu prüfenden Behältern der Mehrzahl von Behältern gleichzeitig zu prüfen.

Alle zum Sensor, zu dem zu prüfenden Behälter und zu dem Trägerelement beschriebenen Merkmale treffen analog auf den zumindest einen weiteren Sensor, den zumindest einen weiteren zu prüfenden Behälter und das zumindest eine weitere Trägerelement und somit auf alle hierin beschriebenen Sensoren, zu prüfenden Behälter und Trägerelemente zu.

Aus Gründen der einfacheren Bezugnahme und eindeutigeren Beschreibung wird der Sensor auch als erster Sensor, der zu prüfende Behälter auch als erster Behälter, das Trägerelement auch als erstes Trägerelement sowie der weitere Sensor auch als zweiter Sensor, der weitere zu prüfende Behälter auch als zweiter Behälter und das weitere Trägerelement auch als zweites Trägerelement bezeichnet. Analog kann die Prüfvorrichtung zumindest einen dritten Sensor, zumindest einen dritten zu prüfenden Behälter und zumindest ein drittes Trägerelement umfassen.

Bevorzugt erfolgt die Relativbewegung zwischen der Mehrzahl von Sensoren und dem jeweiligen Behälter der Mehrzahl von zu prüfenden Behältern zwischen der jeweiligen ersten Anordnung und der jeweiligen zweiten Anordnung parallel und zeitgleich. D. h., dass die Bewegungsrichtung jedes Paares aus einem Sensor der Mehrzahl von Sensoren und dem entsprechenden zu prüfenden Behälter der Mehrzahl von zu prüfenden Behältern parallel zur Bewegungsrichtung des ersten Sensors und des ersten Behälters ausgerichtet ist.

Eine erfindungsgemäße Verpackungsmaschine zum Verpacken von einnehmbaren Produkten, insbesondere von medizinischen oder pharmazeutischen Produkten oder Nahrungs- oder Nahrungsergänzungsmitteln, in Behälter ist in Anspruch 5 definiert.

Auf diese Art und Weise wird eine Verpackungsmaschine bereitgestellt, mittels derer getaktet geförderte Behälter während des Verpackungsprozesses einfach auf Fremdkörper und vor allem auf metallische Fremdkörper geprüft werden können.

Die Verpackungsmaschine kann weiterhin eine Trockenmittelzuführung, die zum Zuführen von Trockenmittel in die Mehrzahl von Behältern eingerichtet ist, und unabhängig davon eine Wattebauschzuführung (auch als Cottoner bezeichnet), die zum Zuführen von Wattebauschen in die Mehrzahl von Behältern eingerichtet ist, umfassen.

Die Zuführeinheit ist vor der Fülleinheit angeordnet und die Verschließeinheit ist nach der Fülleinheit angeordnet. Falls vorhanden, ist die Trockenmittelzuführung bevorzugt zwischen der Zuführeinheit und der Fülleinheit angeordnet. Die Wattebauschzuführung ist, falls vorhanden, bevorzugt zwischen der Fülleinheit und der Verschließeinheit angeordnet.

Ein möglichst einfacher und kompakter Aufbau der Verpackungsmaschine wird dadurch ermöglicht, dass die Mehrzahl von Behältern in der Verpackungsmaschine, insbesondere zwischen der Zuführeinheit, der Fülleinheit und der Verschließeinheit und vorzugsweise in der gesamten Verpackungsmaschine, in der Förderebene und in der Förderrichtung bewegt wird.

Die Fördereinrichtung der Prüfvorrichtung ist bevorzugt dazu eingerichtet, die Mehrzahl von Behältern getaktet durch die Fülleinheit, die Verschließeinheit und die Prüfvorrichtung und ggf. durch die gesamte Verpackungsmaschine zu fördern. Die Fördereinrichtung kann eine Mehrzahl von Förderelementen umfassen, die vorzugsweise synchron zueinander bewegbar sind.

Die Verpackungsmaschine kann als Flaschenlinie ausgebildet sein, in die alle erforderlichen Einheiten, Zuführungen und (Prüf-) Vorrichtungen integriert sind. Die Behälter der Mehrzahl von Behältern sind dann als Flaschen ausgebildet, wie bereits beschrieben.

Der Fördertisch kann sich durch die gesamte Verpackungsmaschine erstrecken, sodass die Mehrzahl von Behältern bzw. Flaschen auf dem Fördertisch durch zumindest die hierin beschriebenen Einheiten, Zuführungen und (Prüf-) Vorrichtungen und vorzugsweise durch alle Einheiten, Zuführungen und (Prüf-) Vorrichtungen der Flaschenlinie gefördert werden.

Grundsätzlich kann die Prüfvorrichtung in zumindest eine aus der Zuführ-, Füll- oder Verschließeinheit oder in zumindest eine aus der Trockenmittel- oder der Wattebauschzuführung der Verpackungsmaschine integriert sein. Alternativ kann die Prüfvorrichtung einer aus der Zuführ-, Füll- oder Verschließeinheit oder der Trockenmittel- oder der Wattebauschzuführung in Förderrichtung nachgeschaltet sein. In diesem Fall bildet die Prüfvorrichtung ein selbstständiges Modul der Verpackungsmaschine.

Es ist auch denkbar, dass die Verpackungsmaschine eine Mehrzahl von Prüfvorrichtungen umfasst, wobei jede Prüfvorrichtung der Mehrzahl von Prüfvorrichtungen gemäß einer der vorbeschriebenen Varianten ausgebildet bzw. angeordnet sein kann.

Ein besonders platzsparender Aufbau der Verpackungsmaschine wird ermöglicht, wenn die Prüfvorrichtung in die Fülleinheit oder die Verschließeinheit integriert ist. Falls vorhanden, kann die Prüfvorrichtung auch in die Wattebauschzuführung integriert sein.

Eine in die Verschließeinheit integrierte Prüfvorrichtung bietet ebenso wie eine der Verschließeinheit nachgeordnete Prüfvorrichtung den Vorteil, dass die Behälter unmittelbar nach dem Prüfen verschlossen werden oder zum Prüfen bereits verschlossen sind. Das Risiko der Kontamination des Behälterinhalts mit Fremdkörpern nach dem Prüfen wird dadurch minimiert bzw. eliminiert.

Die Integration der Prüfvorrichtung in die Fülleinheit oder die Verschließeinheit kann beispielsweise wie folgt umgesetzt werden.

In einer bevorzugten Ausführungsform umfasst die Fülleinheit eine Mehrzahl von Fülleinrichtungen, die jeweils zum Befüllen eines Behälters der Mehrzahl von Behältern eingerichtet sind und die in Förderrichtung beabstandet zueinander angeordnet sind. Der Sensor der Prüfvorrichtung ist dann in Förderrichtung zwischen zwei benachbarten Fülleinrichtungen der Mehrzahl von Fülleinrichtungen angeordnet. Die Prüfvorrichtung umfasst eine Mehrzahl von Sensoren, jeder Sensor ist einer Fülleinrichtung der Mehrzahl von Fülleinrichtungen nachgeschaltet. Alternativ kann jeder Sensor der Mehrzahl von Sensoren einer Fülleinrichtung vorgeschaltet sein.

Zusätzlich oder alternativ umfasst die Verschließeinheit eine Mehrzahl von Verschließeinrichtungen, die jeweils zum Verschließen eines Behälters der Mehrzahl von Behältern eingerichtet sind und die in Förderrichtung beabstandet zueinander angeordnet sind. Die Prüfvorrichtung umfasst eine Mehrzahl von Sensoren, jeder Sensor ist einer Verschließeinrichtung der Mehrzahl von Verschließeinrichtungen nachgeschaltet. Alternativ kann jeder Sensor der Mehrzahl von Sensoren einer Verschließeinrichtung vorgeschaltet sein.

Zusätzlich oder alternativ umfasst die Wattebauschzuführung eine Mehrzahl von Zuführeinrichtungen, die jeweils zum Zuführen eines Wattebauschs in einen Behälter der Mehrzahl von Behältern eingerichtet sind und die in Förderrichtung beabstandet zueinander angeordnet sind. Die Prüfvorrichtung umfasst eine Mehrzahl von Sensoren, jeder Sensor ist einer Zuführeinrichtung der Mehrzahl von Zuführeinrichtungen nachgeschaltet. Alternativ kann jeder Sensor der Mehrzahl von Sensoren einer Zuführeinrichtung vorgeschaltet sein. Dies kann analog auch für die Trockenmittelzuführung gelten.

Wie bereits erwähnt, kann die Prüfvorrichtung alternativ im Wesentlichen unabhängig von den weiteren Einheiten bzw. Zuführungen der Verpackungsmaschine ausgebildet sein und beispielsweise ein eigenständiges Modul der Verpackungsmaschine bilden. Dadurch wird die Flexibilität der Anordnung der Prüfvorrichtung innerhalb der Verpackungsmaschine erhöht und es kann eine geringere Variantenvielfalt der Einheiten bzw. Zuführungen erreicht werden, die wiederum eine Kostensenkung ermöglicht.

Die Prüfvorrichtung kann zum Beispiel zwischen der Fülleinheit und der Verschließeinheit oder, falls vorhanden, zwischen der Wattebauschzuführung und der Verschließeinheit angeordnet sein.

In einer besonders bevorzugten Ausführungsform ist die Prüfvorrichtung in Förderrichtung hinter der Verschließeinheit angeordnet, also der Verschließeinheit nachgeschaltet. Dadurch wird sichergestellt, dass bereits geprüfte Behälter keine Fremdkörper mehr aufnehmen können, da sie zum Zeitpunkt der Prüfung bereits verschlossen sind.

Ein erfindungsgemäßes Verfahren zum Prüfen von Behältern für einnehmbare Produkte, insbesondere für medizinische oder pharmazeutische Produkte oder Nahrungs- oder Nahrungsergänzungsmittel ist in Anspruch 10 definiert.

Auf diese Art und Weise wird ein Verfahren bereitgestellt, mit dem getaktet geförderte Behälter in einer Verpackungsmaschine, wie zum Beispiel einer Flaschenlinie, einfach auf Fremdkörper und vor allem auf metallische Fremdkörper geprüft werden können.

Sofern nicht anders beschrieben, werden alle hierin angegebenen Schritte des Verfahrens vorzugsweise in der angegebenen Reihenfolge ausgeführt.

Das erfindungsgemäße Verfahren wird vorzugsweise mittels der erfindungsgemäßen Prüfvorrichtung oder der erfindungsgemäßen Verpackungsmaschine durchgeführt. Alle zur erfindungsgemäßen Prüfvorrichtung und zur erfindungsgemäßen Verpackungsmaschine beschriebenen Merkmale sind daher analog auf das erfindungsgemäße Verfahren übertragbar und umgekehrt.

Die Schritte b) bis f) werden jeweils für einen Behälter, wie zum Beispiel den ersten Behälter, durchgeführt. Durch das Prüfen des zu prüfenden Behälters gemäß Schritt d) wird der zu prüfende Behälter zum geprüften Behälter, es handelt sich jedoch noch um denselben Behälter, wie zum Beispiel den ersten Behälter.

Vorzugsweise umfasst das Verfahren das Wiederholen der Schritte b) bis f) für weitere zu prüfende Behälter der Mehrzahl von Behältern.

Es ist eine Mehrzahl von Sensoren vorgesehen, so dass das Verfahren das Durchführen der Schritte b) bis f) zeitgleich für mehrere zu prüfende Behälter der Mehrzahl von Behältern umfasst.

Zum Beispiel können die Schritte b) bis f) zeitgleich für den ersten, den zweiten und den dritten Behälter durchgeführt werden. Erfindungsgemäß ist der erster und der zweiter Sensor zum Prüfen des ersten und des zweiten Behälters vorgesehen.

Schritt d) kann erfolgen, wenn der Sensor und der zu prüfende Behälter in der zweiten Anordnung angeordnet sind und/oder während der ersten Relativbewegung gemäß Schritt c) und/oder während der zweiten Relativbewegung gemäß Schritt e).

Das Erzeugen der ersten Relativbewegung gemäß Schritt c) umfasst erfindungsgemäß das Absenken des zu prüfenden Behälters bezüglich der Förderebene, wobei der Sensor unterhalb der Förderebene angeordnet ist. Der Sensor kann stationär angeordnet sein, um einen einfachen Aufbau der Prüfvorrichtung zu ermöglichen. Das Absenken des zu prüfenden Behälters, zum Beispiel mittels des Trägerelements der Prüfvorrichtung, lässt sich besonders einfach realisieren.

Zusätzlich kann das Erzeugen der ersten Relativbewegung gemäß Schritt c) das Anheben des Sensors bezüglich der Förderebene umfassen.

Der zu prüfende Behälter ist vorzugsweise stationär angeordnet.

Die zweite Relativbewegung erfolgt stets entgegengesetzt zur ersten Relativbewegung.

Die Schritte a), b) und f) werden bevorzugt mittels der Fördereinrichtung der Prüfvorrichtung ausgeführt. Die Schritte c) und e) werden bevorzugt durch den Sensor und/oder das Trägerelement der Prüfvorrichtung ausgeführt.

Das Verfahren kann weiterhin das Füllen der Mehrzahl von Behältern umfassen, das bevorzugt von der Fülleinheit der Verpackungsmaschine ausgeführt wird. Das Verfahren kann zudem das Verschließen der Mehrzahl von Behältern umfassen, das bevorzugt von der Verschließeinheit der Verpackungsmaschine ausgeführt wird. Gegebenenfalls kann das Verfahren das Zuführen eines Trockenmittels in jeden Behälter der Mehrzahl von Behältern vorzugsweise mittels der Trockenmittelzuführung und/oder das Zuführen eines Wattebauschs in jeden Behälter der Mehrzahl von Behältern vorzugsweise mittels der Wattebauschzuführung umfassen.

Die Schritte b) bis f) erfolgen vorzugsweise nach dem Füllen oder nach dem Verschließen des zu prüfenden Behälters.

Weitere Merkmale und Vorteile der vorliegenden Erfindung sind nachfolgend unter Bezugnahme auf die beigefügten Figuren beschrieben.
- Fig. 1: zeigt schematisch eine erfindungsgemäße Verpackungsmaschine mit einer erfindungsgemäßen Prüfvorrichtung gemäß einer ersten Ausführungsform.
- Fig. 2a, b: zeigen schematisch eine erfindungsgemäße Prüfvorrichtung gemäß einer zweiten Ausführungsform in einer ersten Anordnung und in einer zweiten Anordnung.
- Fig. 3a, b: zeigen schematisch verschiedene Ausführungsformen eines Trägerelements einer erfindungsgemäßen Prüfvorrichtung.
- Fig. 3c: zeigt schematisch eine Ausführungsform eines Trägerelements einer beispielhaften Prüfvorrichtung, die zum Verständnis der Erfindung dient.

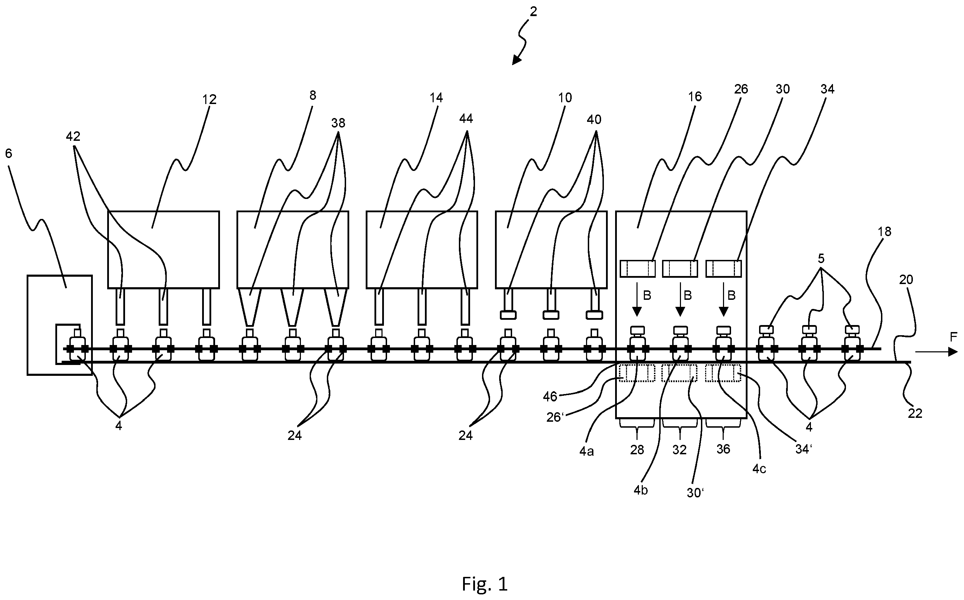

In Fig. 1 ist eine erfindungsgemäße Verpackungsmaschine 2 zum Verpacken von einnehmbaren Produkten (nicht dargestellt) in Behälter 4 schematisch in einer Seitenansicht dargestellt. Die Verpackungsmaschine 2 ist insbesondere als Flaschenlinie ausgebildet, die alle wesentlichen Einheiten, Zuführungen und Vorrichtungen zum Verpacken der einnehmbaren Produkte in die als Flaschen ausgebildeten Behälter 4 umfasst. Es versteht sich, dass die Offenbarung jedoch nicht auf eine Flaschenlinie und als Flaschen ausgebildete Behälter 4 beschränkt ist, sondern allgemein auf Verpackungsmaschinen 2 für entsprechende Behälter 4 zutrifft.

Die Verpackungsmaschine 2 umfasst eine Zuführeinheit 6, die zum Zuführen einer Mehrzahl der Behälter 4 in die Verpackungsmaschine 2 eingerichtet ist, eine Fülleinheit 8, die zum Füllen der Mehrzahl von Behältern 4 mit den einnehmbaren Produkten eingerichtet ist, sowie eine Verschließeinheit 10, die zum Verschließen der Mehrzahl von Behältern 4 mit jeweils einem Deckel 5 eingerichtet ist. Optional umfasst die Verpackungsmaschine 2 zudem eine Trockenmittelzuführung 12, die zum Zuführen von Trockenmittel in die Mehrzahl von Behältern 4 eingerichtet ist, und eine Wattebauschzuführung 14, die zum Zuführen von Wattebauschen in die Mehrzahl von Behältern 4 eingerichtet ist. Schließlich umfasst die Verpackungsmaschine 2 noch eine Prüfvorrichtung 16, die zum Prüfen der Mehrzahl von Behältern 4 auf Fremdkörper, insbesondere auf metallische Fremdkörper, eingerichtet ist.

Die Prüfvorrichtung 16 umfasst eine Fördereinrichtung 18, die dazu eingerichtet ist, die Mehrzahl von Behältern 4 getaktet in einer Förderebene 20 in eine Förderrichtung F durch die Prüfvorrichtung 16 zu bewegen. Die Förderrichtung F erstreckt sich parallel zur Förderebene 20. Bevorzugt sind die Förderrichtung F und die Förderebene 20 horizontal ausgerichtet. Die Förderebene 20 kann beispielsweise durch eine Oberfläche eines Fördertischs 22 definiert sein, auf der die Mehrzahl von Behältern 4 durch die Prüfvorrichtung 16 gefördert werden.

Die Fördereinrichtung 18 erfasst jeden der Mehrzahl von Behältern 4 vorzugsweise formschlüssig, wie durch die Halteelemente 24 in Fig. 1 angedeutet. Beispielsweise handelt es sich bei der Fördereinrichtung 18 um eine Leiste, die sich im Wesentlichen parallel zur Förderrichtung F erstreckt und an der Vorsprünge als Halteelemente 24 angebracht oder ausgebildet sind. Eine solche Fördereinrichtung 18 wird auch als "Rechen" bezeichnet. Alternative geeignete Fördereinrichtungen sind dem Fachmann bekannt.

Die Zuführeinheit 6, die Fülleinheit 8 und die Verschließeinheit 10 sind in dieser Reihenfolge in Förderrichtung F hintereinander angeordnet, um zugeführte Behälter 4 zunächst zu befüllen und dann zu verschließen. Die Trockenmittelzuführung 12 ist bevorzugt in Förderrichtung F zwischen der Zuführeinheit 6 und der Fülleinheit 8 angeordnet und die Wattebauschzuführung 14 ist bevorzugt in Förderrichtung F zwischen der Fülleinheit 8 und der Verschließeinheit 10 angeordnet, sie können aber in Anpassung an die vorliegenden Anforderungen auch an anderer Stelle angeordnet sein. Ebenso ist es denkbar, dass die Verpackungsmaschine 2 weitere Einheiten bzw. Bearbeitungsstationen umfasst.

Es ist besonders vorteilhaft, wenn die Fördereinrichtung 18 derart ausgebildet ist, dass sie die Mehrzahl von Behältern 4 nicht nur durch die Prüfvorrichtung 16 sondern durch die Verpackungsmaschine 2, vorzugsweise durch die gesamte Verpackungsmaschine 2 fördert. In der dargestellten Ausführungsform wird die Mehrzahl von Behältern 4 mittels der Fördereinrichtung 18 von der Zuführeinheit 6 aus durch die Trockenmittelzuführung 12, die Fülleinheit 8, die Wattebauschzuführung 14, die Verschließeinheit 10 und die Prüfvorrichtung 16 in der Förderebene 20 in Förderrichtung F gefördert. Entsprechend kann sich der Fördertisch 22 durch die gesamte Verpackungsmaschine 2, also von der Zuführeinheit 6 bis zur Verschließeinheit 10 und zur Prüfvorrichtung 16, ggf. auch darüber hinaus erstrecken.

Ein besonders platzsparender Aufbau der Verpackungsmaschine 2 ergibt sich, wenn die Mehrzahl von Behältern 4 in der gesamten Verpackungsmaschine 2 in der Förderebene 20 in Förderrichtung F durch die Einheiten bzw. Vorrichtungen der Verpackungsmaschine 2 bewegt werden.

Die Prüfvorrichtung 16 ist in der dargestellten Ausführungsform in Förderrichtung F hinter der Verschließeinheit 10 angeordnet, also der Verschließeinheit 10 nachgeschaltet. Dies hat den Vorteil, dass bereits verschlossene Behälter 4 mittels der Prüfvorrichtung 16 geprüft werden. Eine Verunreinigung des Behälterinhalts der Behälter 4 durch Fremdkörper ist folglich nach dem Prüfen nicht mehr möglich. Die Prüfvorrichtung 16 kann in diesem Fall als eigenständiges Modul der Verpackungsmaschine 2 ausgebildet sein.

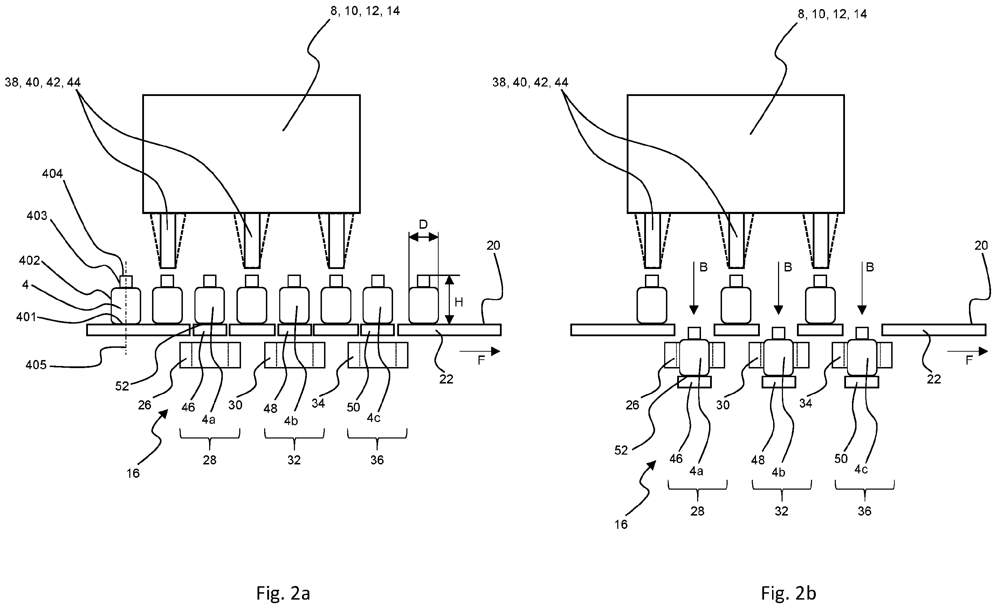

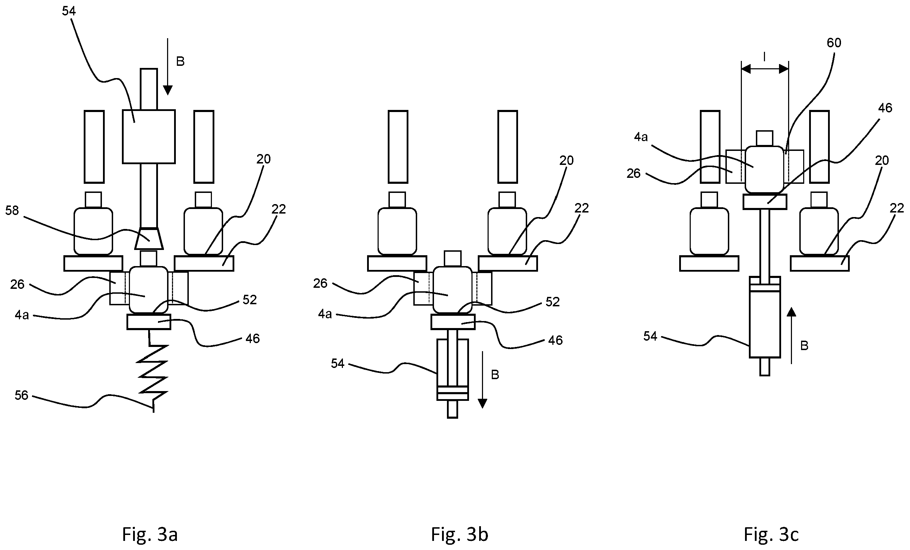

Die Prüfvorrichtung 16 kann auch an anderer Stelle in der Verpackungsmaschine 2 angeordnet sein, zum Beispiel in Förderrichtung F hinter der Fülleinheit 8 oder der Wattebauschzuführung 14 und somit zwischen der jeweiligen Einheit und der in Förderrichtung F folgenden Einheit. Ebenso kann die Verpackungsmaschine 2 eine Mehrzahl von Prüfvorrichtungen 16 an unterschiedlichen Stellen aufweisen. Die Fig. 2a-b und 3a-c zeigen weiterhin Ausführungsformen, bei denen die Prüfvorrichtung 16 in eine Einheit der Verpackungsmaschine 2, insbesondere in die Fülleinheit 8, die Wattebauschzuführung 14 oder die Verschließeinheit 10 integriert ist, wie unter Bezugnahme auf diese Figuren beschrieben.

Wie in Fig. 1 zu sehen, umfasst die Prüfvorrichtung 16 eine Mehrzahl von Sensoren, d.h. erfindungsgemäß umfasst sie zwei Sensoren 26,30, die jeweils in einem Prüfbereich 28,32 der Prüfvorrichtung 16 angeordnet und zum Detektieren von Fremdkörpern, insbesondere von metallischen Fremdkörpern in zu prüfenden Behältern 4a, 4b der Mehrzahl von Behältern 4 eingerichtet sind.

Der Sensor 26 wird daher auch als erster Sensor 26, der Prüfbereich 28 auch als erster Prüfbereich 28 und der zu prüfende Behälter 4a auch als erster Behälter 4a bezeichnet. Weiterhin umfasst die Mehrzahl von Sensoren neben dem ersten Sensor hier zumindest einen weiteren Sensor, wie zum Beispiel den zweiten Sensor 30, der in einem zweiten Prüfbereich 32 angeordnet und zum Detektieren von Fremdkörpern in einem zu prüfenden zweiten Behälter 4b eingerichtet ist, sowie einen dritten Sensor 34, der in einem dritten Prüfbereich 36 angeordnet und zum Detektieren von Fremdkörpern in einem zu prüfenden dritten Behälter 4c eingerichtet ist. Die Mehrzahl von Sensoren umfasst somit den ersten, den zweiten und den dritten Sensor 26, 30, 34. Die Mehrzahl von Sensoren 26, 30, 34 ist in Förderrichtung F hintereinander angeordnet. Die Mehrzahl von Sensoren 26, 30, 34 kann dazu eingerichtet sein, die zu prüfenden Behälter 4a, 4b, 4c, hier also den ersten, den zweiten und den dritten Behälter 4a, 4b, 4c gleichzeitig zu prüfen.

Die Mehrzahl von Sensoren 26, 30, 34 ist unterhalb der Förderebene 20 angeordnet, wie in Fig. 1 gestrichelt für den ersten, den zweiten und den dritten Sensor 26', 30', 34' angedeutet.

In Fig. 1 ist ferner zu erkennen, dass die Einheiten 8, 10 und Zuführungen 12, 14 sowie die Prüfvorrichtung 16 der Verpackungsmaschine 2 bevorzugt zum Befüllen, Verschließen und Prüfen jeweils mehrerer Behälter 4 der Mehrzahl von Behältern 4 ausgebildet sind, um die Effizienz der Verpackungsmaschine 2 zu erhöhen.

Zum Beispiel umfasst die Fülleinheit 8 eine Mehrzahl von Fülleinrichtungen 38, die jeweils zum Befüllen eines Behälters 4 der Mehrzahl von Behältern eingerichtet sind und die in Förderrichtung F beabstandet zueinander angeordnet sind. Die Verschließeinheit 10 kann eine Mehrzahl von Verschließeinrichtungen 40 umfassen, die jeweils zum Verschließen eines Behälters 4 der Mehrzahl von Behältern 4 eingerichtet sind und die in Förderrichtung F beabstandet zueinander angeordnet sind. Falls vorhanden, kann die Trockenmittelzuführung 12 eine Mehrzahl von ersten Zuführeinrichtungen 42 umfassen und die Wattebauschzuführung 14 eine Mehrzahl von zweiten Zuführeinrichtungen 44 umfassen, wobei die Mehrzahl von ersten Zuführeinrichtungen 42 und die Mehrzahl von zweiten Zuführeinrichtungen 44 jeweils zum Zuführen eines Trockenmittels bzw. eines Wattebauschs in einen Behälter 4 der Mehrzahl von Behältern 4 eingerichtet sind und in Förderrichtung F beabstandet zueinander angeordnet sind.

Für den getakteten Betrieb der Verpackungsmaschine 2 ist es von Vorteil, wenn die Anzahl der Fülleinrichtungen 38, der Verschließeinrichtungen 40, der ersten Zuführeinrichtungen 42, der zweiten Zuführeinrichtungen 44 und der Sensoren 26, 30, 34 derselben vorbestimmten Anzahl entsprechen. Im dargestellten Beispiel ist die vorbestimmte Anzahl drei, sodass jeweils drei Einrichtungen 38, 40, 42, 44 sowie drei Sensoren 26, 30, 34 vorgesehen sind. Somit werden in jedem Takt der Verpackungsmaschine 2 an jeder Einheit 8, 10, Zuführung 12, 14 bzw. an der Prüfvorrichtung 16 der Verpackungsmaschine 2 drei Behälter 4 der Mehrzahl von Behältern 4 bearbeitet.

Fig. 2 zeigt ein Ausführungsbeispiel, bei dem die Prüfvorrichtung 16 in die Fülleinheit 8, die Verschließeinheit 10, die Trockenmittelzuführung 12 oder die Wattebauschzuführung 14 integriert ist. In den Fig. 2a und 2b sind zur Veranschaulichung alle Positionen mit Behältern 4 besetzt dargestellt. Es versteht sich, dass insbesondere die Anzahl, der Abstand und die Taktung der Behälter 4 beliebig an die jeweils gegebenen Anforderungen angepasst werden können.

Ist die Prüfvorrichtung 16 und somit die Mehrzahl von Sensoren 26, 30, 34 in eine der Einheiten 8, 10 bzw. Zuführungen 12, 14 integriert, ist bevorzugt jeder Sensor 26, 30, 34 einer der Einrichtungen 38, 40, 42, 44 vor- oder nachgeschaltet. Auch der Abstand der Einrichtungen 38, 40, 42, 44 der jeweiligen Einheit 8, 10 bzw. Zuführung 12, 14 in Förderrichtung ist an die jeweils gegebenen Anforderungen anzupassen. So kann zwischen benachbarten Einrichtungen z.B. ein Behälter oder eine Mehrzahl von Behältern angeordnet sein.

Für alle hierin beschriebenen Ausführungsformen gilt, dass der erste Sensor 26 und/oder ein Trägerelement 46 der Prüfvorrichtung 16, von dem der zu prüfende erste Behälter 4a im Prüfbereich 28 aufgenommen ist und das daher auch als erstes Trägerelement 46 bezeichnet wird, derart beweglich ausgebildet ist, dass eine Relativbewegung zwischen dem ersten Sensor 26 und dem zu prüfenden ersten Behälter 4a in einer Bewegungsrichtung B zwischen einer ersten Anordnung und einer zweiten Anordnung erzeugbar ist. Die Bewegungsrichtung B ist senkrecht zur Förderebene 20 ausgerichtet. Der erste Sensor 26 ist in der ersten Anordnung in der Bewegungsrichtung B beabstandet zum zu prüfenden ersten Behälter 4a angeordnet und umgibt den zu prüfenden ersten Behälter 4a in der zweiten Anordnung zumindest teilweise. Ist eine Mehrzahl von Sensoren 26, 30, 34 vorgesehen, gilt der beschriebene Zusammenhang für jeden Sensor der Mehrzahl von Sensoren 26, 30, 34 und den jeweils zu prüfenden Behälter 4a, 4b, 4c entsprechend, wobei erfindungsgemäß zwei Sensoren 26,30 vorgesehen sind.

Die Relativbewegung zwischen dem ersten Sensor 26 und dem zu prüfenden ersten Behälter 4a kann auf verschiedene Art und Weise erzeugt werden. In einer Alternative, die nicht unter den Wortlaut der Ansprüche fällt, aber zum Verständnis der Erfindung dient, ist nur der erste Sensor 26 bewegbar, um die Relativbewegung zwischen der ersten Anordnung und der zweiten Anordnung zu erzeugen, während das erste Trägerelement 46 mit dem zu prüfenden ersten Behälter 4a stationär im ersten Prüfbereich 28 angeordnet ist. Dies ist beispielsweise bei der Ausführungsform nach Fig. 1 möglich, wobei der erste Sensor 26 bzw. die Mehrzahl von Sensoren 26, 30, 34 in Bewegungsrichtung B beweglich in der Prüfvorrichtung 16 gelagert sein können. Die Mehrzahl von Sensoren 26, 30, 34 kann in der ersten Anordnung oberhalb der zu prüfenden Behälter 4a, 4b, 4c angeordnet sein und in Bewegungsrichtung B nach unten in die zweite Anordnung bewegt werden, bis die Sensoren 26, 30, 34 die Behälter 4a, 4b, 4c umgeben. Das erste Trägerelement 46 bzw. ein zweites Trägerelement 48, von dem der zweite Behälter 4b aufgenommen ist, und ein drittes Trägerelement 50, von dem der dritte Behälter 4c aufgenommen ist, können in diesem Fall jeweils einen Abschnitt des Fördertischs 22 bilden, insbesondere auch integral mit dem Fördertisch 22 ausgebildet sein. Auch bei Ausführungsformen, bei denen die Prüfvorrichtung 16 in eine der Einheiten 8, 10 oder Zuführungen 12, 14 der Verpackungsmaschine 2 integriert ist, wie in den Fig. 2 und 3 dargestellt, kann der erste Sensor 26 bzw. die Mehrzahl von Sensoren 26, 30, 34 bewegbar sein und der jeweils zu prüfende Behälter 4a, 4b, 4c stationär angeordnet sein.

Es kann die Relativbewegung dadurch erzeugt werden, dass der erste Sensor 26 oder die Mehrzahl von Sensoren 26, 30, 34 stationär angeordnet ist und nur das jeweilige Trägerelement 46, 48, 50 und somit der jeweils zu prüfende Behälter 4a, 4b, 4c bewegbar ist. Beispielhafte Ausführungsformen dafür sind nachfolgend unter Bezugnahme auf Fig. 2 und Fig. 3 beschrieben und analog auf die Prüfvorrichtung 16 nach Fig. 1 übertragbar, die unabhängig von den übrigen Einheiten 8, 10 und Zuführungen 12, 14 der Verpackungsmaschine 2 ausgebildet ist. Die Fördereinrichtung 18 ist aus Gründen der Übersichtlichkeit in den Fig. 2 und 3 nicht dargestellt.

In einer weiteren Alternative sind sowohl der erste Sensor 26 und das erste Trägerelement 46 mit dem zu prüfenden ersten Behälter 4a bewegbar ausgebildet. Dies gilt auch für die Mehrzahl von Sensoren 26, 30, 34 und die Mehrzahl von Trägerelementen 46, 48, 50. Da diese Alternative eine Kombination der anderen beiden Möglichkeiten zur Erzeugung der Relativbewegung zwischen dem ersten Sensor 26 und dem zu prüfenden ersten Behälter 4a ist, wird sie im Detail nicht separat beschrieben.

Fig. 2a zeigt die Mehrzahl von zu prüfenden Behältern 4a, 4b, 4c und die Mehrzahl von Sensoren 26, 30, 34 in der jeweiligen ersten Anordnung und Fig. 2b zeigt die Mehrzahl von zu prüfenden Behältern 4a, 4b, 4c und die Mehrzahl von Sensoren 26, 30, 34 in der jeweiligen zweiten Anordnung. Die nachfolgend beispielhaft anhand des ersten Sensors 26, des ersten Behälters 4a und des ersten Trägerelements 46 beschriebenen Merkmale treffen analog auf den zweiten Sensor 30, den zweiten Behälter 4b und das zweite Trägerelement 48 sowie auf den dritten Sensor 34, den dritten Behälter 4c und das dritte Trägerelement 50 zu.

Das erste Trägerelement 46 ist in Bewegungsrichtung B beweglich gelagert, wobei der erste Sensor 26 grundsätzlich unterhalb der Förderebene 20 angeordnet ist. Verschiedene Beispiele für eine derartige Lagerung sind unter Bezugnahme auf Fig. 3a-3c beschrieben. Das erste Trägerelement 46 ist bezüglich der Förderebene 20 absenkbar, wobei der erste Sensor 26 unterhalb der Förderebene 20 angeordnet ist, wie in Fig. 2, 3a und 3b dargestellt.

Der erste Behälter 4a ist im ersten Prüfbereich 28 auf dem ersten Trägerelement 46 angeordnet, das in der ersten Anordnung bevorzugt eine Ebene mit dem Fördertisch 22 bildet. Vorzugsweise weist das erste Trägerelement 46 eine Kontaktfläche 52 auf, auf der der erste Behälter 4a steht. Die Kontaktfläche 52 liegt in der ersten Anordnung (Fig. 2a) in der Förderebene 20 und in der zweiten Anordnung (Fig. 2b) nicht in der Förderebene 20. Bevorzugt ist die Kontaktfläche 52 stets parallel zur Förderebene 20 ausgerichtet.

Sind der zu prüfende erste Behälter 4a und der erste Sensor 26 im Prüfbereich 28 relativ zueinander in der ersten Anordnung angeordnet, kann die Relativbewegung zwischen dem ersten Behälter 4a und dem ersten Sensor 26 in Bewegungsrichtung B erzeugt werden, wie in Fig. 2b dargestellt. Diese Relativbewegung wird auch als erste Relativbewegung bezeichnet. Das erste Trägerelement 46 bewegt dabei den ersten Behälter 4a aus der ersten Anordnung in die zweite Anordnung, in der der erste Sensor 26 den ersten Behälter 4a zumindest teilweise umgibt. Bevorzugt ist der erste Sensor 26 als Ringsensor ausgebildet und umgibt den ersten Behälter 4a in der zweiten Anordnung in Umfangsrichtung des ersten Behälters 4a vollständig.

Während der ersten Relativbewegung aus der ersten in die zweite Anordnung und/oder in der zweiten Anordnung erkennt der erste Sensor 26, ob ein Fremdkörper in dem ersten Behälter 4a enthalten ist und prüft den Behälter 4a somit auf Fremdkörper.

Ist der erste Behälter 4a geprüft, kann die Relativbewegung zwischen dem geprüften ersten Behälter 4a und dem ersten Sensor 26 parallel zur Bewegungsrichtung B zurück in die erste Anordnung (Fig. 2a) erzeugt werden, die auch als zweite Relativbewegung bezeichnet wird. Das erste Trägerelement 46 bewegt dabei den ersten Behälter 4a aus der zweiten Anordnung in die erste Anordnung, sodass der erste Sensor 26 wieder beabstandet zum ersten Behälter 4a angeordnet ist. Der erste Behälter 4a kann dann aus dem ersten Prüfbereich 28 gefördert werden, um im nächsten Takt das Prüfen eines weiteren Behälters 4 der Mehrzahl von Behältern 4 mittels des ersten Sensors 26 zu ermöglichen.

Wie in Fig. 2a weiterhin zu sehen ist, weist jeder Behälter 4 im Allgemeinen einen Boden 401, eine umlaufende Wand 402 und einen Hals 403 auf. Der Hals 403 bildet eine Öffnung 404 des Behälters 4, durch die die einnehmbaren Produkte in den Behälter 4 gefüllt und aus dem Behälter 4 entnommen werden können. Ein Deckel 5 (siehe Fig. 1) ist vorzugsweise auf den Behälter 4 aufgepresst oder aufgeschraubt, wobei dann der Hals 403 eine Gewinde aufweist, das mit einem Gewinde des Deckels 5 eingreift. Jeder Behälter 4 der Mehrzahl von Behältern 4 ist vorzugsweise rotationssymmetrisch um eine Mittelachse 405 ausgebildet. Die Mittelachse 405 ist vorzugsweise zumindest im Prüfbereich 28 senkrecht zur Förderebene 20 und parallel zur Bewegungsrichtung B ausgerichtet. Ferner weist jeder Behälter 4 der Mehrzahl von Behältern 4 einen Durchmesser D auf, der bevorzugt im Bereich der umlaufenden Wand 402, insbesondere im Bereich eines größten Durchmessers der umlaufenden Wand 402 zu messen ist. Eine Höhe H jedes Behälters 4 ist bevorzugt parallel zur Mittelachse 405 des Behälters 4 vom Boden 401 bis zu einem oberen Rand des Halses 403 definiert. Solche Behälter können auch als Flaschen bezeichnet werden.

In den Figuren 3a bis 3c sind verschiedene Möglichkeiten zur beweglichen Lagerung des ersten Trägerelements 46 dargestellt. Dabei ist jeweils ein Ausschnitt der Prüfvorrichtung 16 bzw. der Verpackungsmaschine 2 mit dem ersten Sensor 26 und dem ersten Behälter 4a bzw. dem ersten Trägerelement 46 in der zweiten Anordnung dargestellt. Es versteht sich, dass bei jeder Ausführungsform der Figuren 3a bis 3c der erste Sensor 26, der erste Behälter 4a und das erste Trägerelement 46 analog zur Anordnung in Fig. 2a in der ersten Anordnung angeordnet sein können. Zudem lassen sich die in Fig. 3a bis 3c dargestellten Möglichkeiten zur beweglichen Lagerung des ersten Trägerelements 46 analog auf Ausführungsformen übertragen, bei denen die Prüfvorrichtung 16 eigenständig ausgebildet ist, wie beispielsweise in Fig. 1 dargestellt.

Des Weiteren treffen die dargestellten Möglichkeiten analog auf die Mehrzahl von Sensoren 26, 30, 34, die mehreren zu prüfenden Behälter 4a, 4b, 4c und die Mehrzahl von Trägerelementen 46, 48, 50 zu.

Bei allen Ausführungsformen der Figuren 3a bis 3c umfasst die Prüfvorrichtung 16 einen Aktor 54, der mit dem ersten Trägerelement 46 verbunden und dazu ausgebildet ist, das erste Trägerelement 46 parallel zur Bewegungsrichtung B zu bewegen.

In der Ausführungsform gemäß Fig. 3a ist das erste Trägerelement 46 mittels eines Vorspannelements 56 in eine Position vorgespannt, in der die erste Kontaktfläche 52 in der Förderebene 20 liegt. Das Vorspannelement 56 kann ein Federelement, wie zum Beispiel eine Druckfeder sein. Der Aktor 54 kann ein hydraulischer oder pneumatischer Aktor sein, wie zum Beispiel ein Hydraulikzylinder oder ein pneumatischer Zylinder, oder ein elektrischer, elektro-magnetischer oder mechanischer Linearantrieb sein. Der Aktor 54 ist derart angeordnet und ausgebildet, dass er mittels eines Stempels 58 entgegen einer Vorspannkraft des Vorspannelements 56 auf das erste Trägerelement 46 oder, wie dargestellt, auf den ersten Behälter 4a einwirkt. Genauer kann das Vorspannelement 56 hierzu unterhalb des ersten Trägerelements 46 angeordnet und mit diesem verbunden sein und der Aktor 54 mit dem Stempel 58 oberhalb des ersten Trägerelements 46 und des zu prüfenden ersten Behälters 4a angeordnet sein. Wird der Stempel 48 mittels des Aktors 54 in Bewegungsrichtung B nach unten bewegt, trifft der Stempel 58 auf den ersten Behälter 4a und drückt diesen samt dem ersten Trägerelement 46 aus der ersten Anordnung nach unten in die zweite Anordnung. Bei dieser ersten Relativbewegung werden das erste Trägerelement 46 und der erste Behälter 4a zumindest teilweise durch den ersten Sensor 26 hindurch bewegt. Ist die Prüfvorrichtung 16 in die Verschließeinheit 10 integriert oder nach der Verschließeinheit 10 angeordnet, trifft der Stempel 58 auf den Deckel 5 auf dem ersten Behälter 4a. Ansonsten trifft der Stempel 28 auf den Hals 403 des ersten Behälters 4a. Der erste Sensor 26 ist hier unterhalb der Förderebene 20 angeordnet und beispielsweise stationär am Fördertisch 22 angebracht.

In der Ausführungsform nach Fig. 3b ist der Aktor 54 fest mit dem ersten Trägerelement 46 verbunden, sodass eine Stellbewegung des Aktors 54 direkt auf das erste Trägerelement 46 übertragen wird. Der Aktor 54 ist hier beispielhaft als hydraulischer oder pneumatischer Zylinder dargestellt, kann aber auch durch einen beliebigen anderen Aktor gebildet sein, wie bereits beschrieben. Der erste Sensor 26 ist auch in dieser Ausführungsform unterhalb der Förderebene 20 angeordnet und beispielsweise stationär am Fördertisch 22 angebracht. Der Aktor 54 ist unterhalb des ersten Trägerelements 46 angeordnet und z.B. mittels einer Kolbenstange des Aktors 54 fest mit dem Trägerelement 46 verbunden. Der Aktor 54 bewegt das erste Trägerelement 46 samt dem zu prüfenden ersten Behälter 4a in Bewegungsrichtung B aus der ersten Anordnung in die zweite Anordnung nach unten. Bei dieser ersten Relativbewegung werden das erste Trägerelement 46 und der erste Behälter 4a zumindest teilweise durch den Sensor 26 hindurch bewegt. Das erste Trägerelement 46 ist also absenkbar.

Die nachfolgende Ausführungsform fällt nicht unter den Wortlaut der Ansprüche, dient aber zum Verständnis der Erfindung.

Die Ausführungsform nach Fig. 3c entspricht im Wesentlichen der Ausführungsform nach Fig. 3b mit dem Unterschied, dass der erste Sensor 26 bezüglich der Förderebene 20 oberhalb des ersten Trägerelements 46 und des ersten Behälters 4a angeordnet ist und das erste Trägerelement 46 anhebbar ist. Der erste Sensor 26 ist bevorzugt stationär angeordnet, zum Beispiel indem er an einem Maschinengestell der Prüfvorrichtung 16 oder der Verpackungsmaschine 2 befestigt ist. Der erste Sensor 26 kann aber auch beweglich gelagert sein, sodass sowohl das erste Trägerelement 46 als auch der erste Sensor 26 bewegbar sind. Der Aktor 54 ist erneut als hydraulischer oder pneumatischer Zylinder dargestellt, kann aber beliebig ausgebildet sein. Der Aktor 54 ist unterhalb des ersten Trägerelements 46 angeordnet und bewegt das erste Trägerelement 46 samt dem zu prüfenden ersten Behälter 4a in Bewegungsrichtung B aus der ersten Anordnung in die zweite Anordnung nach oben. Auch bei dieser ersten Relativbewegung werden das erste Trägerelement 46 und der erste Behälter 4a zumindest teilweise durch den Sensor 26 hindurch bewegt.

In allen Ausführungsformen ist die Mehrzahl von Sensoren 26, 30, 34 vorzugsweise als Ringsensor ausgebildet, der den jeweils zu prüfenden Behälter 4a, 4b, 4c in der zweiten Anordnung in Umfangsrichtung des Behälters 4a, 4b, 4c vollständig umgibt. Beispielhaft ist anhand der Fig. 3c erläutert, dass der jeweilige Sensor 26 dann eine Öffnung 60 aufweist, die vorzugsweise als Durchgangsöffnung ausgebildet ist und in die der zu prüfende Behälter 4a einführbar ist. Ein Innenumfang des ersten Sensors 26 entspricht einem Innenumfang dieser Öffnung 60. Ein Innendurchmesser I des ringförmigen ersten Sensors 26 entspricht dem Durchmesser der Öffnung 60 und ist größer als der Durchmesser D des ersten Behälters 4a.

## Patentansprüche

1. Prüfvorrichtung (16) für eine Verpackungsmaschine (2) zum Verpacken von einnehmbaren Produkten, insbesondere von medizinischen oder pharmazeutischen Produkten oder von Nahrungs- oder Nahrungsergänzungsmitteln, in Behälter (4), wobei die Prüfvorrichtung (16) umfasst:
eine Fördereinrichtung (18), die dazu eingerichtet ist, eine Mehrzahl von Behältern (4) getaktet in einer Förderebene (20) in eine Förderrichtung (F) durch die Prüfvorrichtung (16) zu fördern;
einen ersten und einen zweiten Sensor (26, 30), die jeweils in einem Prüfbereich (28, 32) der Prüfvorrichtung (16) angeordnet sind und die jeweils zum Detektieren von Fremdkörpern, insbesondere von metallischen Fremdkörpern, in einem ersten bzw. zweiten zu prüfenden Behälter (4a, 4b) der Mehrzahl von Behältern (4) eingerichtet sind;
wobei der erste und der zweite Sensor (26, 30) und/oder ein erstes und ein zweites Trägerelement (46, 48) der Prüfvorrichtung (16), von denen der erste bzw. zweite zu prüfende Behälter (4a, 4b) im Prüfbereich (28, 32) aufgenommen sind, derart beweglich ausgebildet sind, dass eine Relativbewegung zwischen dem ersten und dem zweiten Sensor (26, 30) und dem ersten bzw. zweiten zu prüfenden Behälter (4a, 4b) in einer Bewegungsrichtung (B) zwischen einer ersten Anordnung und einer zweiten Anordnung erzeugbar ist, wobei die Bewegungsrichtung (B) senkrecht zur Förderebene (20) ausgerichtet ist;
wobei der erste und der zweite Sensor (26, 30) in der ersten Anordnung in der Bewegungsrichtung (B) beabstandet zum ersten bzw. zweiten zu prüfenden Behälter (4a, 4b) angeordnet sind und wobei der erste und der zweite Sensor (26, 30) in der zweiten Anordnung den ersten bzw. zweiten zu prüfenden Behälter (4a, 4b) zumindest teilweise umgeben;
wobei das erste und das zweite Trägerelement (46, 48) derart ausgebildet sind, dass sie den ersten bzw. zweiten zu prüfenden Behälter (4a, 4b) im ersten bzw. im zweiten Prüfbereich (28, 32) von unten stützen und dass sie in Bewegungsrichtung (B) bewegbar sind;
**dadurch gekennzeichnet, dass**
der erste und der zweite Sensor (26, 30) unterhalb der Förderebene (20) angeordnet sind und das erste und das zweite Trägerelement (46, 48) bezüglich der Förderebene (20) absenkbar sind; und
der erste und der zweite Sensor (26, 30) in Förderrichtung (F) hintereinander angeordnet sind.

2. Prüfvorrichtung (16) nach Anspruch 1, **dadurch gekennzeichnet, dass** der erste und der zweite Sensor (26, 30) ringförmig ausgebildet sind.

3. Prüfvorrichtung (16) nach Anspruch 1 oder 2, **dadurch gekennzeichnet, dass** der erste und der zweite Sensor (26, 30) in der zweiten Anordnung den ersten bzw. zweiten zu prüfenden Behälter (4a, 4b) in Umfangsrichtung des zu prüfenden Behälters (4a, 4b) vollständig umgeben.

4. Prüfvorrichtung (16) nach einem der vorangehenden Ansprüche, **dadurch gekennzeichnet, dass** eine Kontaktfläche (52) des ersten und des zweiten Trägerelements (46, 48), auf der der erste bzw. zweite zu prüfende Behälter (4a, 4b) angeordnet ist, in der ersten Anordnung in der Förderebene (20) liegt und in der zweiten Anordnung nicht in der Förderebene (20) liegt.

5. Verpackungsmaschine (2) zum Verpacken von einnehmbaren Produkten, insbesondere von medizinischen oder pharmazeutischen Produkten oder von Nahrungs- oder Nahrungsergänzungsmitteln, in Behälter (4), wobei die Verpackungsmaschine (2) umfasst:
eine Zuführeinheit (6), die zum Zuführen einer Mehrzahl von Behältern (4) in die Verpackungsmaschine (2) eingerichtet ist;
eine Fülleinheit (8), die zum Füllen der Mehrzahl von Behältern (4) mit den einnehmbaren Produkten eingerichtet ist;
eine Verschließeinheit (10), die zum Verschließen der Mehrzahl von Behältern (4) mit jeweils einem Deckel (5) eingerichtet ist; und
eine Prüfvorrichtung (16) gemäß einem der Ansprüche 1 bis 4 zum Prüfen der Mehrzahl von Behältern (4) auf Fremdkörper, insbesondere metallische Fremdkörper, darin.

6. Verpackungsmaschine (2) nach Anspruch 5, **dadurch gekennzeichnet, dass** die Fördereinrichtung (18) der Prüfvorrichtung (16) dazu eingerichtet ist, die Mehrzahl von Behältern (4) getaktet durch die Fülleinheit (8), die Verschließeinheit (10) und die Prüfvorrichtung (16) zu fördern.

7. Verpackungsmaschine (2) nach Anspruch 5 oder 6, **dadurch gekennzeichnet, dass** die Prüfvorrichtung (16) in Förderrichtung (F) hinter der Verschließeinheit (10) angeordnet ist.

8. Verpackungsmaschine (2) nach Anspruch 5 oder 6, **dadurch gekennzeichnet, dass** die Prüfvorrichtung (16) in die Fülleinheit (8) oder die Verschließeinheit (10) integriert ist.

9. Verpackungsmaschine (2) nach Anspruch 8, **dadurch gekennzeichnet, dass** die Fülleinheit (8) eine Mehrzahl von Fülleinrichtungen (38) umfasst, die jeweils zum Befüllen eines Behälters (4a, 4b) der Mehrzahl von Behältern (4) eingerichtet und in Förderrichtung (F) beabstandet zueinander angeordnet sind; und
die Verschließeinheit (10) eine Mehrzahl von Verschließeinrichtungen (40) umfasst, die jeweils zum Verschließen eines Behälters (4a, 4b) der Mehrzahl von Behältern (4) eingerichtet und in Förderrichtung (F) beabstandet zueinander angeordnet sind;
wobei der erste und der zweite Sensor (26, 30) der Prüfvorrichtung (16) jeweils in Förderrichtung (F) zwischen zwei benachbarten Fülleinrichtungen (38) der Mehrzahl von Fülleinrichtungen (38) angeordnet sind; oder
wobei der erste und der zweite Sensor (26, 30) der Prüfvorrichtung (16) jeweils in Förderrichtung (F) zwischen zwei benachbarten Verschließeinrichtungen (40) der Mehrzahl von Verschließeinrichtungen (40) angeordnet sind.

10. Verfahren zum Prüfen von Behältern (4) für einnehmbare Produkte, insbesondere für medizinische oder pharmazeutische Produkte oder für Nahrungs- oder Nahrungsergänzungsmittel, wobei das Verfahren die folgenden Schritte umfasst:
a) Fördern einer Mehrzahl von Behältern (4) getaktet in einer Förderebene (20) in eine Förderrichtung (F);
b) Anordnen eines ersten und eines zweiten zu prüfenden Behälters (4a, 4b) der Mehrzahl von Behältern (4) in jeweils einem Prüfbereich (28, 32) in einer ersten Anordnung relativ zu einem ersten bzw. einem zweiten Sensor (26, 30) zum Detektieren von Fremdkörpern, insbesondere von metallischen Fremdkörpern, wobei der erste und der zweite Sensor (26, 30) in der ersten Anordnung in einer Bewegungsrichtung (B) beabstandet zum ersten bzw. zweiten zu prüfenden Behälter (4a, 4b) angeordnet sind, wobei die Bewegungsrichtung (B) senkrecht zur Förderebene (20) ausgerichtet ist;
c) Erzeugen einer ersten Relativbewegung zwischen dem ersten und dem zweiten zu prüfenden Behälter (4a, 4b) und dem ersten bzw. dem zweiten Sensor (26, 30) in der Bewegungsrichtung (B) aus der ersten Anordnung in eine zweite Anordnung, in der der erste und der zweite Sensor (26, 30) den ersten bzw. zweiten zu prüfenden Behälter (4a, 4b) zumindest teilweise umgeben;
d) Erkennen mittels des ersten und des zweiten Sensors (26, 30), ob ein Fremdkörper in dem ersten bzw. zweiten zu prüfenden Behälter (4a, 4b) enthalten ist, und dadurch Prüfen des ersten und des zweiten Behälters (4a, 4b);
e) Erzeugen einer zweiten Relativbewegung zwischen dem geprüften ersten und zweiten Behälter (4a, 4b) und dem ersten bzw. dem zweiten Sensor (26, 30) parallel zur Bewegungsrichtung (B) zurück in die erste Anordnung, und
f) Fördern des geprüften ersten und zweiten Behälters (4a, 4b) aus dem jeweiligen Prüfbereich (28, 30), vorzugsweise in der Förderebene (20) in Förderrichtung (F).
**dadurch gekennzeichnet, dass** Schritt c) umfasst:
Absenken des ersten und des zweiten zu prüfenden Behälters (4a, 4b) bezüglich der Förderebene (20), wobei der erste und der zweite Sensor (26, 30) unterhalb der Förderebene (20) angeordnet sind und wobei der erste und der zweite Sensor (26, 30) in Förderrichtung (F) hintereinander angeordnet sind.

## Claims

1. A testing device (16) for a packaging machine (2) for packaging products, in particular medical or pharmaceutical products or foodstuffs or dietary supplements, in containers (4), wherein the testing device (16) comprises:
a conveying device (18), which is configured to convey a plurality of containers (4) in a clocked fashion in a conveying plane (20) in a conveying direction (F) through the testing device (16);
a first and a second sensor (26, 30), which are each arranged in a testing region (28, 32) of the testing device (16) and which are each configured to detect foreign bodies, in particular metal foreign bodies, in a first or second container (4a, 4b) to be tested of the plurality of containers (4); and
wherein the first and the second sensor (26, 30) and/or a first and a second carrier element (46, 48) of the testing device (16), by which the first or second containers (4a, 4b) to be tested are received in the testing region (28, 32), are formed movably in such a way that a relative movement between the first and the second sensor (26, 30) and the first or second containers (4a, 4b) to be tested in a movement direction (B) between a first arrangement and a second arrangement can be generated, wherein the movement direction (B) is oriented perpendicularly to the conveying plane (20);
wherein the first and the second sensor (26, 30) in the first arrangement are arranged in the movement direction (B) at a distance from the first and second containers (4a, 4b) to be tested, and wherein the first and the second sensor (26, 30) in the second arrangement at least partially surround the first and second containers (4a, 4b) to be tested;
wherein the first and the second carrier element (46, 48) are formed in such a way that they support the first and second containers (4a, 4b) to be tested from below in the first and in the second test region (28, 32), and in such a way that they are movable in the movement direction (B);
**characterised in that**
the first and the second sensor (26, 30) are arranged below the conveying plane (20) and the first and the second carrier element (46, 48) are lowerable relative to the conveying plane (20); and
the first and the second sensor (26, 30) are arranged one behind the other in the conveying direction (F).

2. The testing device (16) according to claim 1, **characterised in that** the first and the second sensor (26, 30) are annular.

3. The testing device (16) according to claim 1 or 2, **characterised in that** the first and the second sensor (26, 30) in the second arrangement completely surround the first and second containers (4a, 4b) to be tested in the circumferential direction of the containers (4a, 4b) to be tested.

4. The testing device (16) according to any one of the preceding claims, **characterised in that** a contact face (52) of the first and the second carrier element (46, 48), on which the first or second containers (4a, 4b) to be tested is arranged, in the first arrangement lies in the conveying plane (20) and in the second arrangement does not lie in the conveying plane (20).

5. A packaging machine (2) for packaging ingestible products, in particular medical or pharmaceutical products or foodstuffs or dietary supplements, in containers (4), wherein the packaging machine (2) comprises:
a feed unit (6), which is configured to feed a plurality of containers (4) into the packaging machine (2);
a filling unit (8), which is configured to fill the plurality of containers (4) with the ingestible products;
a closing unit (10), which is configured to close the plurality of containers (4) with a lid (5) in each case; and
a testing device (16) according to any one of claims 1 to 4 for testing the plurality of containers (4) for foreign bodies, in particular metal foreign bodies, therein.

6. The packaging machine (2) according to claim 5, **characterised in that** the conveying device (18) of the testing device (16) is configured to convey the plurality of containers (4) in a clocked fashion through the filling unit (8), the closing unit (10) and the testing device (16).

7. The packaging machine (2) according to claim 5 or 6, **characterised in that** the testing device (16) is arranged behind the closing unit (10) in the conveying direction (F).

8. The packaging machine (2) according to claim 5 or 6, **characterised in that** the testing device (16) is integrated into the filling unit (8) or the closing unit (10).

9. The packaging machine (2) according to claim 8, **characterised in that** the filling unit (8) comprises a plurality of filling devices (38), which are each configured to fill a container (4a, 4b) of the plurality of containers (4) and are arranged at a distance from one another in the conveying direction (F); and
the closing unit (10) comprises a plurality of closing devices (40), which are each configured to close a container (4a, 4b) of the plurality of containers (4) and are arranged at a distance from one another in the conveying direction (F);
wherein the first and the second sensor (26, 30) of the testing device (16) are each arranged between two adjacent filling devices (38) of the plurality of filling devices (38) in the conveying direction (F); or
wherein the first and the second sensor (26, 30) of the testing device (16) are each arranged between two adjacent closing devices (40) of the plurality of closing devices (40) in the conveying direction (F).

10. A method for testing containers (4) for ingestible products, in particular for medical or pharmaceutical products or for foodstuffs or dietary supplements, wherein the method comprises the following steps:
a) conveying a plurality of containers (4) in a clocked fashion in a conveying plane (20) in a conveying direction (F);
b) arranging a first and a second container (4a, 4b) to be tested of the plurality of containers (4) in a testing region (28, 32) in a first arrangement relative to a first and a second sensor (26, 30) for detection of foreign bodies, in particular of metal foreign bodies, wherein the first and the second sensor (26, 30) in the first arrangement in a movement direction (B) are arranged at a distance from the first and second containers (4a, 4b) to be tested, wherein the movement direction (B) is oriented perpendicularly to the conveying plane (20);
c) generating a first relative movement between the first and the second containers (4a, 4b) to be tested and the first and the second sensor (26, 30) in the movement direction (B) from the first arrangement into a second arrangement, in which the first and the second sensor (26, 30) at least partially surround the first and second containers (4a, 4b) to be tested;
d) identifying by means of the first and the second sensor (26, 30) whether a foreign body is contained in the first and second containers (4a, 4b) to be tested, and thus testing the first and the second container (4a, 4b);
e) generating a second relative movement between the tested first and second container (4a, 4b) and the first and the second sensor (26, 30) parallel to the movement direction (B) back into the first arrangement; and
f) conveying the tested first and second container (4a, 4b) from the respective testing region (28, 30), preferably in the conveying plane (20) in the conveying direction (F),
**characterised in that** step c) comprises:
lowering the first and the second container (4a, 4b) to be tested relative to the conveying plane (20), wherein the first and the second sensors (26, 30) are arranged below the conveying plane (20), and wherein the first and the second sensors (26, 30) are arranged one behind the other in the conveying direction (F).

## Revendications

1. Dispositif d'inspection (16) pour une machine de conditionnement (2), destinée à conditionner des produits ingérables, notamment des produits médicaux ou pharmaceutiques ou des produits alimentaires ou compléments alimentaires dans des contenants (4), le dispositif d'inspection (16) comprenant :
un système de convoyage (18), qui est configuré pour convoyer en cadence une pluralité de contenants (4) dans un plan de convoyage (20), dans une direction de convoyage (F) à travers le dispositif d'inspection (16) ;
un premier et un deuxième capteurs (26, 30), dont chacun est placé dans une zone d'inspection (28, 32) du dispositif d'inspection (16) et dont chacun est configuré pour détecter des corps étrangers, notamment des corps étrangers métalliques dans un premier ou un deuxième contenants (4a, 4b) à inspecter de la pluralité de contenants (4) ;
le premier et le deuxième capteurs (26, 30) et / ou un premier et un deuxième élément de support (46, 48) du dispositif d'inspection (16), par lesquels le premier ou le deuxième contenant (4a, 4b) à inspecter sont réceptionnés dans la zone d'inspection (28, 32) étant conçus de manière déplaçable, de telle sorte qu'un déplacement relatif entre le premier et le deuxième capteurs (26, 30) et le premier ou le deuxième contenant (4a, 4b) à inspecter puisse être généré dans une direction de déplacement (B) entre un premier agencement et un deuxième agencement, la direction de déplacement (B) étant orientée à la perpendiculaire du plan de convoyage (20) ;
le premier et le deuxième capteurs (26, 30) étant placés dans le premier agencement en étant écartés dans la direction de déplacement (B) par rapport au premier ou au deuxième contenant (4a, 4b) à inspecter et dans le deuxième agencement, le premier et le deuxième capteurs (26, 30) entourant au moins partiellement le premier ou le deuxième contenant (4a, 4b) à inspecter ;
le premier et le deuxième éléments de support (46, 48) étant conçus de sorte à soutenir par le dessous le premier ou le deuxième contenant (4a, 4b) à inspecter dans la première ou dans la deuxième zone d'inspection (28, 32) et à être déplaçables dans la direction de déplacement (B) ;
**caractérisé en ce que**
le premier et le deuxième capteurs (26, 30) sont placés en-dessous du plan de convoyage (20) et le premier et le deuxième éléments de support (46, 48) sont abaissables en rapport au plan de convoyage (20) ; et
le premier et le deuxième capteurs (26, 30) sont placés l'un derrière l'autre dans la direction de convoyage (F).

2. Dispositif d'inspection (16) selon la revendication 1, **caractérisé en ce que** le premier et le deuxième capteurs (26, 30) sont conçus de forme annulaire.

3. Dispositif d'inspection (16) selon la revendication 1 ou 2, **caractérisé en ce que** dans le deuxième agencement, le premier et le deuxième capteurs (26, 30) entourent totalement le premier ou le deuxième contenant (4a, 4b) à inspecter dans la direction périphérique du contenant (4a, 4b) à inspecter.

4. Dispositif d'inspection (16) selon l'une quelconque des revendications précédentes, **caractérisé en ce que** dans le premier agencement, une surface de contact (52) du premier et du deuxième éléments de supports (46, 48), sur laquelle le premier ou le deuxième contenant (4a, 4b) à inspecter est placé se situe dans le plan de convoyage (20) et dans le deuxième agencement, ne se situe pas dans le plan de convoyage (20).

5. Machine de conditionnement (2), destinée à conditionner des produits ingérables, notamment des produits médicaux ou pharmaceutiques ou des produits alimentaires ou compléments alimentaires dans des contenants (4), la machine de conditionnement (2) comprenant :
une unité d'amenage (6), qui est configurée pour amener une pluralité de contenants (4) dans la machine de conditionnement (2) ;
une unité de remplissage (8), qui est configurée pour remplir la pluralité de contenants (4) avec les produits ingérables,
une unité de fermeture (10), qui est configurée pour fermer la pluralité de contenants (4) avec chaque fois un couvercle (5) ; et
un dispositif d'inspection (16) selon l'une quelconque des revendications 1 à 4, destiné à inspecter la pluralité de contenants (4) au niveau de la présence de corps étrangers, notamment de corps étrangers métalliques en leur intérieur.

6. Machine de conditionnement (2) selon la revendication 5, **caractérisée en ce que** le système de convoyage (18) du dispositif d'inspection (16) est configuré pour convoyer en cadence la pluralité de contenants (4) à travers l'unité de remplissage (8), l'unité de fermeture (10) et le dispositif d'inspection (16).

7. Machine de conditionnement (2) selon la revendication 5 ou 6, **caractérisée en ce que** le dispositif d'inspection (16) est placé derrière l'unité de fermeture (10) dans la direction de convoyage (F).

8. Machine de conditionnement (2) selon la revendication 5 ou 6, **caractérisée en ce que** le dispositif d'inspection (16) est intégré dans l'unité de remplissage (8) ou dans l'unité de fermeture (10).

9. Machine de conditionnement (2) selon la revendication 8, **caractérisée en ce que** l'unité de remplissage (8) comporte une pluralité de systèmes de remplissage (38), dont chacun est configuré pour remplir un contenant (4a, 4b) de la pluralité de contenants (4) et qui sont placés avec un écart mutuel dans la direction de convoyage (F) ; et
**en ce que** l'unité de fermeture (10) comprend une pluralité de systèmes de fermeture (40), dont chacun est configuré pour fermer un contenant (4a, 4b) de la pluralité de contenants (4) et qui sont placés avec un écart mutuel dans la direction de convoyage (F) ;
le premier et le deuxième capteurs (26, 30) du dispositif d'inspection (16) étant placés chacun dans la direction de convoyage (F) entre deux systèmes de remplissage (38) voisins de la pluralité de systèmes de remplissage (38) ; ou
le premier et le deuxième capteurs (26, 30) du dispositif d'inspection (16) étant placés chacun dans la direction de convoyage (F) entre deux systèmes de fermeture (40) voisins de la pluralité de systèmes de fermeture (40).

10. Procédé, destiné à inspecter des contenants (4) de produits ingérables, notamment de produits médicaux ou pharmaceutiques ou de produits alimentaires ou compléments alimentaires, le procédé comprenant les étapes suivants, consistant à :
a) convoyer en cadence une pluralité de contenants (4) dans un plan de convoyage (20), dans une direction de convoyage (F) ;
b) placer dans chaque fois une zone d'inspection (28, 32) un premier et un deuxième contenants (4a, 4b) à inspecter de la pluralité de contenants (4) dans un premier agencement par rapport à un premier ou à un deuxième capteurs (26, 30), pour détecter des corps étrangers, notamment des corps étrangers métalliques, dans le premier agencement, le premier et le deuxième capteurs (26, 30) étant placés dans une direction de déplacement (B) avec un écart par rapport au premier ou au deuxième contenant (4a, 4b) à inspecter, la direction de déplacement (B) étant orientée à la perpendiculaire du plan de convoyage (20) ;
c) générer un premier déplacement relatif entre le premier et le deuxième contenants (4a, 4b) à inspecter et le premier ou le deuxième capteur (26, 30) dans la direction de déplacement (B) à partir du premier agencement dans un deuxième agencement, dans lequel le premier et le deuxième capteurs (26, 30) entourent au moins partiellement le premier ou le deuxième contenant (4a, 4b) à inspecter ;
d) identifier au moyen du premier et du deuxième capteurs (26, 30), si un corps étranger est contenu dans le premier ou le deuxième contenant (4a, 4b) à inspecter et de ce fait, inspecter le premier et le deuxième contenants (4a, 4b) ;
e) générer un deuxième déplacement relatif entre le premier et le deuxième contenants (4a, 4b) inspectés et le premier ou le deuxième capteur (26, 30), à la parallèle de la direction de déplacement (B), en retour dans le premier agencement ; et
f) convoyer le premier et le deuxième contenant (4a, 4b) inspecté hors de la zone d'inspection (28, 30) respective, de préférence dans le plan de convoyage (20), dans la direction de convoyage (F),
**caractérisé en ce que** l'étape c) comprend :
l'abaissement du premier et du deuxième contenants (4a, 4b) à inspecter en rapport au plan de convoyage (20), le premier et le deuxième capteurs (26, 30) étant placés en-dessous du plan de convoyage (20) et le premier et le deuxième capteurs (26, 30) étant placés l'un derrière l'autre dans la direction de convoyage (F).
